# EUROPÄISCHE PATENTSCHRIFT

(11) **EP 1 044 785 B1**
(45) Veröffentlichungstag und Bekanntmachung des Hinweises auf die Patenterteilung: **25.02.2004**
(21) Anmeldenummer: 00106504.4
(22) Anmeldetag: 25.03.2000
(51) Int. Cl.: B29C 51/26

(54) **Vorrichtung zum Verformen einer erwärmten Platte aus thermoplastischem Kunststoff**
Device for deforming a heated plate of thermoplastic material
Dispositif pour deformer une plaque thermoplastique chauffée

(30) Priorität: 13.04.1999 DE 19916493
(43) Veröffentlichungstag der Anmeldung: 18.10.2000
(73) Patentinhaber: Adolf Illig Maschinenbau GmbH & Co. KG, 74081 Heilbronn (DE)
(72) Erfinder: Schwarzmann, Peter, 74081 Heilbronn (DE)

(56) Entgegenhaltungen:
- EP-A- 0 063 462
- DE-C- 4 433 922
- PATENT ABSTRACTS OF JAPAN vol. 010, no. 207 (M-500), 19. Juli 1986 (1986-07-19) & JP 61 047232 A (MEIWA SANGYO KK), 7. März 1986 (1986-03-07)

## Beschreibung

Die Erfindung betrifft eine Vorrichtung zum Verformen einer erwärmten Platte aus thermoplastischem Kunststoff nach der Gattung des Hauptanspruches.
Aus der gattungsbildenden DE 32 27 168 A 1 ist es bekannt, die zu verformende Platte durch eine Hubeinrichtung von einem Stapel aufzunehmen, in eine Zentriereinrichtung einzulegen, die Platte in dieser Zentriereinrichtung in die gewünschte Position zu bringen, diese Zentriereinrichtung in die eigentliche Beschickungsstation, die auch als Vorheizstation ausgebildet sein kann, zu überführen und dort in die Transporteinrichtung zu übergeben. Das Zentrieren der Platte vor dem lagegenauen Übergeben an die Transporteinrichtung erfordert bei dieser Bauweise eine ganze Arbeitsstation und erhöht damit den Platzbedarf der gesamten Vorrichtung ganz entscheidend. Es sind eine Reihe von Antrieben erforderlich für das Abheben, das Zentrieren in zwei Richtungen, das horizontale Verschieben der Zentriereinrichtung und das Übergeben der Platte an die Transporteinrichtung. Die Zeit für das lagegenaue Zuführen ist relativ lang, was eine längere Taktzeit der Vorrichtung beim Herstellen eines Formteils zur Folge hat.

Durch Vorbenutzung des Anmelders ist es ferner bekannt, auf eine vorgeschaltete eigene Beschickungseinrichtung zu verzichten, den Plattenstapel in der kombinierten Beschickungs- und Vorheizstation anzuordnen und dort sowohl vom Stapel aufzunehmen als auch in die Transporteinrichtung zu übergeben. Um die Platte vor dem Einführen in die Transporteinrichtung lagegenau zu zentrieren ist eine seitlich angeordnete und in die Beschickungsstation fahrbare Zentrierplatte vorgesehen. Die Platte wird abgehoben, die Zentrierplatte wird unter die abgehobene Platte gefahren und auf ihr wird diese Platte abgelegt. Nach deren Zentrierung auf der Zentrierplatte mittels dafür vorgesehener Antriebe wird die Platte erneut von der Hubeinrichtung - nun richtig ausgerichtet - aufgenommen und in die Transporteinrichtung eingeführt. Nachteilig bei dieser Bauweise ist der höhenmäßige Platzbedarf der Zentriereinrichtung, da diese oberhalb des Plattenstapels und - wenn eine Vorheizung in dieser Beschickungsstation vorgesehen ist - unterhalb der Vorheizung angeordnet werden muss. Durch die untere Vorheizung verliert man sowieso Höhe, so dass die Zentrierplatte eine weitere Reduzierung der möglichen Stapelhöhe mit sich bringt. Ein häufigerer Wechsel des Plattenmagazins ist die Folge. Zudem verliert man Zeit durch die Verschiebebewegungen der Zentrierplatte, was sich wiederum taktzeitverlängernd auswirkt

Eine weitere Lösung des Anmelders liegt darin, die unzentriert von einer Hubeinrichtung aufgenommene Platte vor dem Erfassen durch die Transporteinrichtung in einen verschiebbaren Zentriertrichter durch freien Fall einzuwerfen und so zu zentrieren. Auch dieser Trichter benötigt Platz und die Verschiebebewegungen benötigen Zeit.

Eine weitere bekannte Ausführung des Anmelders schlägt vor, an den Transportschienen der Transporteinrichtung verschiebbare Leisten anzuordnen und die, die Sauger der Hubeinrichtung tragende, Platte horizontal in einer Richtung - quer zur Transportrichtung - verschiebbar zu gestalten. Damit war aber weder eine Korrektur der Plattenlage in Vorschubrichtung möglich - sie erfolgte durch Verschiebung der gesamten Transporteinrichtung in Transportrichtung nach ihrem Vorschub in die Formstation. Auch ein rotativer Versatz war nicht auszugleichen.

Der Erfindung liegt die Aufgabe zugrunde, die Vorrichtung so zu gestalten, daß das Zentrieren einer von einem Stapel aufgenommenen Platte vor dem Einführen in die Transporteinrichtung in beiden Richtungen und durch entsprechende Drehung der Platte ohne Reduzierung der möglichen Höhe des Plattenstapels erfolgen kann. Eine zusätzliche Arbeitsstation sowie horizontal über große Strecken verschiebbare Einrichtungen sollten nicht erforderlich sein. Der Zeitaufwand für das Zentrieren sollte gering sein, um keine negative Beeinflussung der Taktzahl herbeizuführen.

Zur Lösung der Aufgabe dienen die Merkmale des Hauptanspruches. Vorteilhafte Ausbildungen und Weiterbildungen der Vorrichtung sind Merkmale der Unteransprüche. Die Erfindung ist anhand der schematischen Zeichnungen näher beschrieben.

Es zeigt:

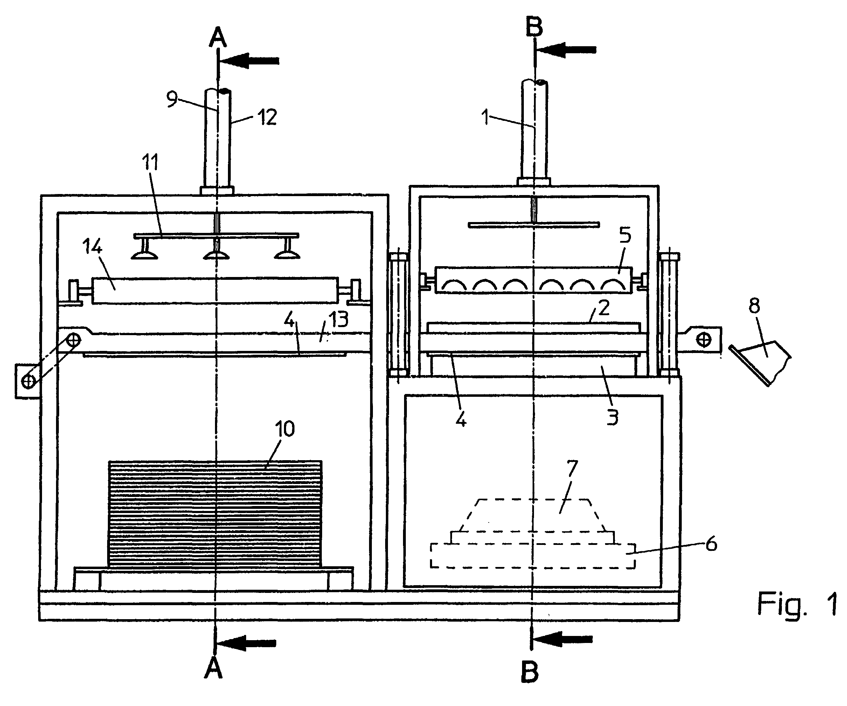

- Figur 1: eine Vorderansicht der Vorrichtung.
- Figur 2: einen Längsschnitt durch die Beschickungsstation.
- Figur 3: einen Querschnitt durch die Hubeinrichtung.
- Figur 4: eine Justiereinrichtung für die Längs- und Querverschiebung und
- Figur 5: für die Drehbewegung der Halteplatte für die Sauger.
- Figur 6 und 7: eine andere Ausführungsform einer Justiereinrichtung.

Die Vorrichtung besteht aus einer Formstation 1 mit zwei Spannrahmen 2, 3, von denen der obere Spannrahmen 2 höhenverschiebbar ist und die im Zusammenwirken eine Platte 4 aus thermoplastischem Kunststoff einspannen. Über eine Heizeinrichtung 5 erfolgt die Erwärmung der Platte 4 auf Verformungstemperatur. Mittels einer auf dem höhenbeweglichen Formtisch 6 angeordneten Form 7 und durch Anlegen von Vakuum wird die Platte 4 zu einem Formteil 8 tiefgezogen.

Seitlich von der Formstation 1 ist eine Beschickungsstation 9, die vorteilhafterweise auch als Vorheizstation ausgebildet ist, angeordnet, in die Platten 4 als Stapel 10 eingelegt werden. Über eine Hubeinrichtung 11 und einen Antrieb 12 wird jeweils die oberste Platte 4 des Stapels 10 abgehoben und an die Transporteinrichtung 13 übergeben, die beide Stationen 1, 9 verbindet. Wenn die Beschickungsstation als Vorheizstation ausgebildet ist, sind in dieser eine oder zwei Heizungen 14 verschiebbar angeordnet, mit denen zumindest eine teilweise Beheizung der Platten 4 vorgenommen werden kann.

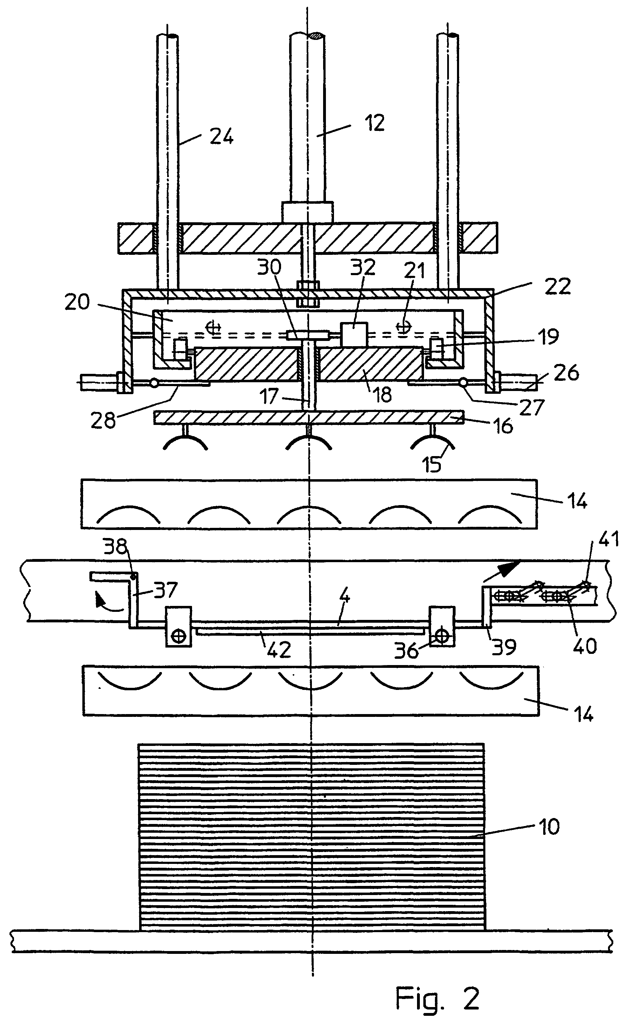

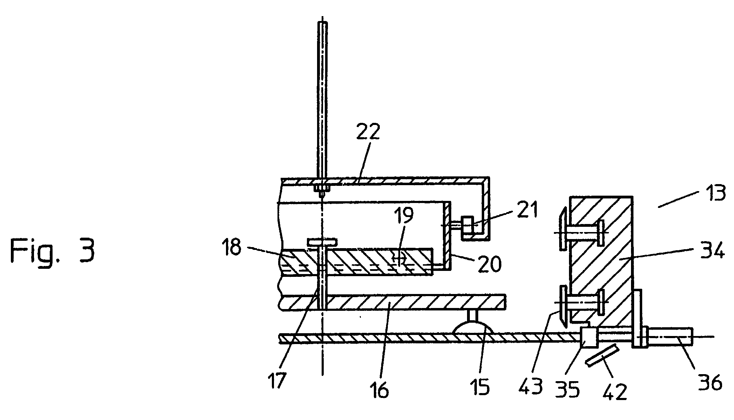

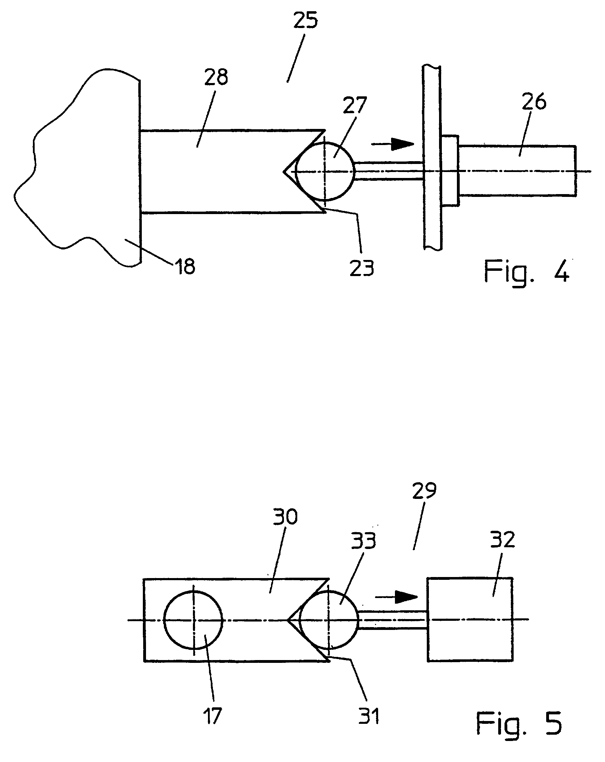

Die nähere Gestaltung der Hubeinrichtung 11, die gleichzeitig als Zentriereinrichtung ausgeführt ist, ist in Figur 2 dargestellt. Die an Vakuum anschließbaren Sauger 15 sitzen an einer Halteplatte 16 mit einem zentralen Bolzen 17, der drehbar in einer Konsole 18 gelagert ist. Diese ist durch Führungseinrichtungen, dargestellt durch Rollen 19, verschiebbar zu einem Schlitten 20 ausgebildet, der wiederum über Führungseinrichtungen wie Rollen 21 im Träger 22 verschiebbar ist. (siehe Fig. 3) Die beiden Bewegungsrichtungen von Konsole 18 und Schlitten 20 verlaufen rechtwinklig zueinander in bzw. quer zur Vorschubrichtung der Transporteinrichtung 13. Am Träger 22 greift ein Antrieb 12 für dessen Hubbewegung zur Plattenentnahme vom Stapel 10 an. Stangen 24 dienen zu dessen Führung. Der mögliche Verschiebeweg von Konsole 18 und Schlitten 20 liegt in der Größenordnung von 70 mm. Vor jeder Abholung einer Platte 4 werden Konsole 18 und Schlitten 20 in eine definierte Ausgangslage gebracht, die beispielsweise einen Verschiebeweg von 35 mm in jede Richtung ermöglicht. Hierzu ist eine Justiereinrichtung 25 vorgesehen, die bei der in Figur 4 dargestellten Ausführungsform aus zwei gegenüberliegend am Träger 22 befestigten Antrieben 26 besteht, die je eine Kugel 27 horizontal verschieben. Jede Kugel 27 trifft in eine keilförmige Aussparung 23 in einer Lasche 28, die an der Konsole 18 sitzt. Anstelle der Kugel 27 kann eine Rolle oder ein keilförmiges Gegenstück angebracht sein, die dieselbe Funktion erreichen. Auch ist es möglich, anstelle eines in beiden Richtungen wirkenden Antriebs getrennte Antriebe für die Längs- und Querverschiebung einzusetzen. Durch die Ausfahrbewegung der Antriebe 26 wird die Ausgangslage der Konsole 18 in Vorschubrichtung erreicht. Über die keilförmige Aussparung 23 an der Lasche 28 erfolgt die Justierung quer zur Transportrichtung der Platte 4.
Die Justierung der Halteplatte 16 rotativ betrachtet erfolgt über eine Justiereinrichtung 29, die in Figur 5 dargestellt ist. Sie besteht aus einer am Bolzen 17 befestigten Platte 30 mit einem keilförmigen Ausschnitt 31, mit dem eine vom Antrieb 32 bewegte Kugel 33 in Eingriff gebracht werden kann. Anstelle der Kugel 33 kann analog eine Rolle oder ein keilförmiges Gegenstück angebracht sein.

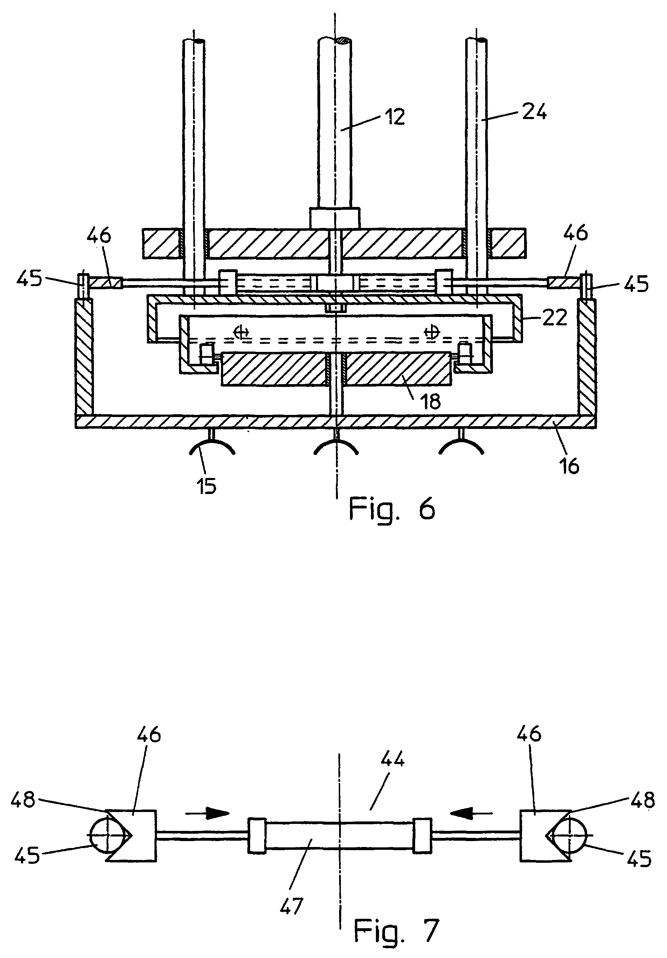

Die Figuren 6 und 7 zeigen eine andere Ausführungsform einer Justiereinrichtung 44. Mit der Halteplatte 16 verbunden sind zwei Bolzen 45, mit denen je eine Platte 46 in Eingriff gebracht werden kann, angetrieben von einem am Träger 22 angeordneten, in beiden Richtungen wirkenden Antrieb 47. Über die Ausfahrbewegung des Antriebes 47 erfolgt die Zentrierung in Längsrichtung. über die Schrägen 48 sowohl in Querrichtung als auch rotativ.

Zum Schieben der aufgenommenen Platte 4 in die richtige Lage dienen einerseits an den Transportschienen 34 befestigte Schieber 35, bewegt von einem Antrieb 36. Eine Korrektur der Lage der Platte 4 in Vorschubrichtung erfolgt durch einen Schieber 37 der schwenkbar um den Drehpunkt 38 ausgebildet ist mittels nicht dargestellter Antriebe sowie über Schieber 39, die horizontal verschiebbar und vertikal verlagerbar ausgebildet sind. Die vertikale Verlagerung, z. B. durch Führung von am Schieber 39 befestigte Bolzen 40, geführt in schräg verlaufenden Langlöchem 41, ist auf der Auslaufseite erforderlich, damit die Platte 4 ohne Kollision mit dem Schieber 39 in die Formstation 1 transportiert werden kann.

Der Verfahrensablauf ist wie folgt. Die abgesenkte, in Ausgangslage stehende Halteplatte 16 entnimmt mit ihren Saugern 15 die oberste Platte 4 und führt sie bis kurz vor die Anlage an die Transportschienen 34 (siehe Figur 3). Die Justiereinrichtungen 25, 29, 44 öffnen und über die Schieber 35, 37, 39 wird die Platte 4 in die richtige definierte Lage geschoben und gedreht. Klappleisten 42 klemmen die Platte 4 gegen die Spitzen der Transportkette 43, so dass die Platte 4 sicher gehalten ist. Nach einer weiteren Aufwärtsfahrt der Halteplatte 16 können die seitlich angeordneten Heizungen 14 über die Platte 4 fahren bzw. die Platte 4 kann unbeheizt in die Formstation 1 lagegenau transportiert werden. In oberer Lage der Halteplatte 16 führen die Justiereinrichtungen 25, 29, 44 wieder die Ausgangslage der Halteplatte 16 herbei.

## Patentansprüche

1. Vorrichtung zum Verformen einer erwärmten Platte (4) aus thermoplastischem Kunststoff mit einer Formstation (1), einer Beschickungsstation (9), einer zwischen diesen Stationen (1,9) verlaufenden Transporteinrichtung (13), einer Hubeinrichtung (11) zum Entnehmen der jeweils obersten Platte (4) eines Plattenstapels (10) und zum Einführen in die Transporteinrichtung (13) sowie mit einer Zentriereinrichtung zum lagegenauen Positionieren der aufgenommenen Platte (4) vor ihrem Einführen in die Transporteinrichtung (13), **gekennzeichnet durch** folgende Merkmale:
a) eine Halteplatte (16) für Sauger (15) ist drehbar in einer Konsole (18) gehalten,
b) die Konsole (18) ist horizontal verschiebbar an einem Schlitten (20) geführt,
c) der Schlitten (20) ist rechtwinklig verschiebbar zu dieser horizontalen Bewegung an einem Träger (22) geführt,
d) der Träger (22) ist höhenverschiebbar über einen Antrieb (12) ausgebildet.

2. Vorrichtung nach Anspruch 1 **gekennzeichnet durch** je eine Justiereinrichtung (25, 29, 44) zur Herbeiführung einer definierten . Ausgangslage der Halteplatte (16) vor ihrer Aufnahme einer Platte (4).

3. Vorrichtung nach Anspruch 2 **dadurch gekennzeichnet, dass** die Justiereinrichtung (25) zum horizontalen Justieren der Halteplatte (16) aus zwei an der Konsole (18) befestigten Laschen (28) mit einer keilförmigen Aussparung (23) besteht, in die eine horizontal von je einem Antrieb (26) verschiebbare Kugel (27) in Eingriff gebracht werden kann.

4. Vorrichtung nach Anspruch 2 oder 3 **dadurch gekennzeichnet, daß** die Justiereinrichtung (29) zum rotativen Justieren der Halteplatte (16) aus einer am Bolzen (17) befestigten Platte (30) mit einer keilförmigen Aussparung (31) besteht, in die eine horizontal von einem an der Konsole (18) befestigten Antrieb (32) verschiebbare Kugel (33) in Eingriff gebracht werden kann.

5. Vorrichtung nach Anspruch 2 **dadurch gekennzeichnet, dass** die Justiereinrichtung (44) von zwei Bolzen (45) gebildet wird, die mit der Halteplatte (16) verbunden sind und die über einen am Träger (22) befestigten Antrieb (47) in Ausgangslage gebracht werden können, indem je eine mit dem Antrieb (47) verbundene Platte (46) mit Schräge (48) in Eingriff mit den Bolzen (45) gebracht wird.

## Claims

1. Device for shaping a heated plate (4) of thermoplastic synthetic material, comprising a moulding station (1), a coating station (9), a transport device (13) running between the stations (1, 9), a stroke device (11) for removing the respective uppermost plate (4) of a plate stack (10) and for introducing it into the transport device (13), and a centring device for positionally exact positioning of the received plate (4) before introduction thereof into the transport device (13), **characterised by** the following features:
a) a mounting plate (16) for suckers (15) is rotatably mounted in a bracket (18),
b) the bracket (18) is guided at a slide (20) to be horizontally displaceable,
c) the slide (20) is guided at a carrier (22) to be displaceable at right angles to this horizontal movement and
d) the carrier (22) is constructed to be displaceable in height by way of a drive (12).

2. Device according to claim 1, **characterised by** a respective adjusting device (25, 29, 44) for producing a defined starting position of the mounting plate (16) before its reception of a plate (4).

3. Device according to claim 2, **characterised in that** the adjusting device (25) for horizontal adjustment of the mounting plate (16) consists of two straps (28), which are fastened to the bracket (18), with a wedge-shaped recess (23) into which a ball (27), which is horizontally displaceable by a respective drive (26), can be brought into engagement.

4. Device according to claim 2 or 3, **characterised in that** the adjusting device (29) for rotational adjustment of the mounting plate (16) consists of a plate (30), which is fastened to the pin (17), with a wedge-shaped recess (31) into which a ball (33), which is horizontally displaceable by a drive (32) fastened to the bracket (18), can be brought into engagement.

5. Device according to claim 2, **characterised in that** the adjustment device (44) is formed by two pins (45), which are connected with the mounting plate (16) and can be brought by way of a drive (47), which is fastened to the carrier (22), into starting position **in that** a respective plate (46), which is connected with the drive (47), with chamfers (48) is brought into engagement with the pins (45).

## Revendications

1. Dispositif pour façonner une plaque chauffée (4) en matière synthétique thermoplastique comprenant une station de formage (1), une station de chargement (9), un dispositif de transport (13) qui s'étend entre ces stations (1, 9), un dispositif élévateur (11) destiné à prélever la plaque extrême supérieure (4) sur une pile de plaques (10) et à l'introduire dans le dispositif de transport (13), ainsi qu'un dispositif de centrage destiné à positionner en position précise la plaque reçue (4) avant qu'elle ne soit introduite dans le dispositif de transport (13),
**caractérisé par** les caractéristiques suivantes :
a) une plaque de support (16) pour ventouses (15) est tenue mobile en rotation dans une console (18),
b) la console (18) est guidée en translation horizontale sur un chariot (20),
c) le chariot (20) est guidé sur un support (22) pour se déplacer en translation perpendiculairement à ce mouvement horizontal,
d) le support (22) peut être déplacé en translation en hauteur au moyen d'un entraînement (12).

2. Dispositif selon la revendication 1,
**caractérisé par**
un dispositif d'ajustement (25, 29, 44) servant à créer une position de départ définie de la plaque de support (16) avant qu'elle ne reçoive une plaque (4).

3. Dispositif selon la revendication 2,
**caractérisé en ce que**
le dispositif d'ajustement (25) servant à l'ajustement horizontal de la plaque de support (16) est composé de deux pattes (28) fixées à la console (18) et munies d'un évidement (23) en forme de coin dans lequel peut être engagée en prise une bille (27) qui peut être mise en translation horizontale, chacune par un entraînement (26).

4. Dispositif selon la revendication 2 ou 3,
**caractérisé en ce que**
le dispositif d'ajustement (29) destiné à l'ajustement en rotation de la plaque de support (16) est constitué par une plaque (30) fixée à la tige (17) et munie d'un évidement (31) en forme de coin, dans lequel peut être engagée en prise une bille (33) qui peut être déplacée en translation horizontalement par un entraînement (32) fixé à la console (18).

5. Dispositif selon la revendication 2,
**caractérisé en ce que**
le dispositif d'ajustement (44) est formé de deux tiges (45) qui sont solidaires de la plaque de support (16) et qui peuvent être mises en position de départ au moyen d'un entraînement (47) fixé au support (22) par le fait qu'une plaque (46) reliée à l'entraînement (47) et munie d'une surface oblique (48) est mise en prise avec chaque tige (45).
